# EUROPÄISCHE PATENTANMELDUNG

(11) **EP 2 653 862 A1**
(43) Veröffentlichungstag der Anmeldung: **23.10.2013**
(21) Anmeldenummer: 13164486.6
(22) Anmeldetag: 19.04.2013
(51) Int. Cl.: G01N 29/04, G01N 29/22, G01N 29/265

(54) **Ultraschall-Prüfkopf**

(30) Priorität: 20.04.2012 DE 102012206523
(71) Anmelder: intelligeNDT Systems & Services GmbH, 91052 Erlangen (DE)
(72) Erfinder: Zaus, Edgar, 90768 Fürth (DE); Meier, Rainer, 91058 Erlangen (DE); Gripp, Sebastian, 63700 Alzenau (DE)
(74) Vertreter: Meissner, Bolte & Partner

(57) **Zusammenfassung**

Bei einem Ultraschall-Prüfkopf (1) ist in einem stabförmigen Gehäuse (2) ein lineares Ultraschallwandler-Array (6) angeordnet, dessen Sende-und Empfangsfläche (8) sich parallel zu einer Längsachse (16) des Gehäuses (2) erstreckt. An einer Stirnseite (19) des Gehäuses (2) befindet sich außerdem ein Einzelwandler (12), dessen Sende- und Empfangsfläche (14) senkrecht zu dieser Längsachse (16) orientiert ist.

## Beschreibung

Die Erfindung bezieht sich auf einen Ultraschall-Prüfkopf.

Insbesondere im Flugzeugbau werden für den Aufbau zweischaliger Wandelemente zwischen der Innen- und der Außenschale Strukturelemente aus kohlefaserverstärkten Kunststoffen (CFK) verwendet, die eine komplexe Geometrie aufweisen. Diese Strukturelemente werden durch ein Netzwerk sich kreuzender, an den Längsseiten beispielsweise zusätzlich T-förmig abgewinkelter Stege gebildet, die quer zu den beiden Schalen verlaufen und zur Versteifung des Wandelementes dienen. Durch die Stege werden auf diese Weise hohle Zellen oder Taschen bzw. Kammern gebildet, die beispielsweise einen rechteckigen, wabenförmigen oder dreieckförmigen Querschnitt aufweisen.

Um die Fehlerfreiheit solcher Strukturelemente sicherzustellen, müssen diese daher vor dem Zusammenbau des Wandelementes, d.h. vor dem Anbringen der Innen- und Außenschalen mit Ultraschallverfahren untersucht werden. Da es sich bei diesen Strukturelementen um Bauteile mit komplizierten Profilen insbesondere an den Stellen handelt, an denen die Stege zusammenstoßen oder sich kreuzen, beispielsweise L, T oder Kreuzprofile, müssen je nach konstruktiver Ausgestaltung des Bauteils jeweils für eine spezielle Geometrie angepasste Ultraschall-Prüfkopfe verwendet werden, so dass es unter Umständen erforderlich sein kann, die Prüfung nacheinander mit unterschiedlichen Ultraschall-Prüfköpfen durchzuführen.

Der Erfindung liegt daher die Aufgabe zu Grunde, einen Ultraschall-Prüfkopf anzugeben, mit dem es möglich ist, derartige Bauteile zu prüfen, ohne dass ein Wechsel des Ultraschall-Prüfkopfes erforderlich ist. Außerdem liegt der Erfindung die Aufgabe zu Grunde, ein mit diesem Ultraschall-Prüfkopf durchzuführendes Verfahren zur Ultraschallprüfung eines Bauteils mit einer Vielzahl von hohlen Kammern anzugeben, deren aneinandergrenzende seitliche Wandflächen in einem abgerundeten Kantenbereich ineinander übergehen.

Hinsichtlich des Ultraschall-Prüfkopfes wird die genannte Aufgabe gelöst mit den Merkmalen des Patentanspruches 1. Gemäß diesen Merkmalen enthält der Ultraschall-Prüfkopf ein in einem stab- oder stiftförmigen Gehäuse angeordnetes lineares Ultraschall-Array dessen Sende- und Empfangsfläche sich parallel zu einer Längsachse des Gehäuses erstreckt, sowie einen an einer Stirnseite des Gehäuses angeordneten Einzelwandler, dessen Sende- und Empfangsfläche senkrecht zu dieser Längsachse orientiert ist.

Durch diese Maßnahme können mit einem einzigen Ultraschall-Prüfkopf sowohl ebene Wandflächen der durch die Stege gebildeten Kammern als auch Bereiche an denen solche ebenen Wandflächen aneinander grenzen, beispielsweise abgerundete Kanten-oder Eckbereiche, geprüft werden. Durch die Verwendung eines linearen Ultraschallwandler-Arrays können die ebenen Wandflächen außerdem entweder in wenigen oder in einer einzigen Prüffahrt geprüft werden, wenn die Abmessungen des Ultraschallwandler-Arrays an die Bauhöhe der Kammern bzw. Stege angepasst ist. Durch die Anbringung eines Einzelwandlers an der Stirnseite des Gehäuses ist es außerdem möglich, auch Eckbereiche eines solchen Strukturelementes zu prüfen, die durch drei Wandelemente gebildet sind, indem der Ultraschall-Prüfkopf bei Erreichen einer solchen Eckposition derart geneigt wird, dass die Sende- und Empfangsfläche des Einzelwandlers auf die Ecke hin gerichtet ist.

Vorteilhafte Ausgestaltungen des Ultraschall-Prüfkopfes sind in den Patentanspruch 1 nachgeordneten Unteransprüchen angegeben.

Hinsichtlich des Verfahrens wird die genannte Aufgabe gelöst mit einem Verfahren mit den Merkmalen des Patentanspruches 4 gemäß denen der Ultraschall-Prüfkopf zum Prüfen einer ersten Wandfläche mit parallel zu dieser orientierter Sende- und Empfangsfläche des linearen Ultraschallwandler-Arrays entlang der ersten Wandfläche in einem konstanten Abstand geführt wird, bis die Mittellängsachse des Ultraschallwandler-Arrays parallel zu einer ersten Trennlinie zwischen abgerundetem Kantenbereich und erster seitlichen Wandfläche liegt, wobei erste Trennlinie und Mittellängsachse eine zur ersten Wandfläche senkrechte Ebene aufspannen. Anschließend wird der Ultraschall-Prüfkopf zum Prüfen des abgerundeten Kantenbereiches schrittweise so lange derart gedreht und/oder verfahren, dass eine senkrecht auf der Sende- und Empfangsfläche stehende und die Mittellängsachse schneidende Gerade stets durch den Radiusmittelpunkt des abgerundeten Kantenbereiches geht und der durch diese Gerade festgelegte Abstand zwischen Sende- und Empfangsfläche und abgerundetem Kantenbereich stets gleichbleibt, bis die Sende- und Empfangsfläche des Ultraschallwandler-Arrays senkrecht zu einer an den abgerundeten Kantenbereich angrenzenden zweiten seitlichen Wandfläche orientiert ist. Danach wird der Ultraschall-Prüfkopf entlang der zweiten seitlichen Wandfläche mit parallel zu dieser orientierter Sende- und Empfangsfläche des Ultraschallwandler-Arrays geführt. Zur Prüfung eines sich an den Kantenbereich anschließenden Eckbereichs wird der Ultraschall-Prüfkopf derart geneigt, dass die Sende- und Empfangsfläche des Einzelwandlers auf den Eckbereich hin gerichtet ist. Beispielsweise wird der Ultraschall-Prüfkopf hierfür nach der Prüfung eines Kantenbereichs wieder in Richtung des Kantenbereichs zurückbewegt und die Prüfung des im Kantenbereich vorhandenen Eckbereichs durchgeführt. Prinzipiell ist jedoch möglich, die Kanten- und Eckbereiche in beliebiger Reihenfolge zu prüfen.

Durch diese Maßnahme ist eine sichere und vollständige Prüfung der besonders kritischen Kantenbereiche sowie der Eckbereiche der von den Stegen gebildeten Kammern möglich.

Zur weiteren Erläuterung der Erfindung wird auf das in den Figuren dargestellte Ausführungsbeispiel verwiesen. Es zeigen:
Fig. 1 einen Ultraschall-Prüfkopf gemäß der Erfindung in einer schematischen perspektivischen Darstellung,
Fig. 2 den Ultraschall-Prüfkopf in einer Draufsicht auf die Stirnseite,
Fig. 3 ein Bauteil mit senkrecht zueinander verlaufenden Stegen, die ein aus rechteckigen Zellen oder Kammern aufgebautes Gitter bilden,
Fig. 4 und 5 den Ultraschall-Prüfkopf gemäß der Erfindung in unterschiedlichen Positionen jeweils bei Prüffahrten entlang eines L-Profils,
Fig. 6 den Ultraschall-Prüfkopf in einer Prüfposition in einem Eckbereich des Bauteils.

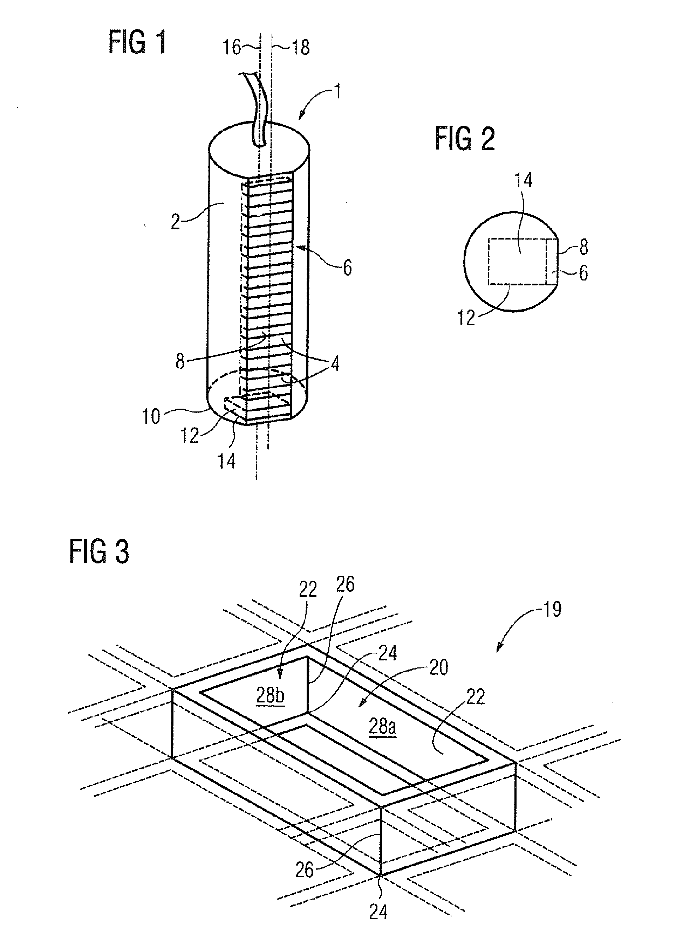

Gemäß Fig. 1 umfasst der Ultraschall-Prüfkopf 1 ein stabförmiges Gehäuse 2, in dem ein aus einer Vielzahl von in einer Reihe angeordneter Wandlerelementen 4 aufgebautes lineares Ultraschallwandler-Array 6 angeordnet ist. Im Beispiel ist ein Gehäuse 2 dargestellt, das die Form eines Zylinderabschnittes aufweist. Grundsätzlich kann das Gehäuse jedoch auch eine andere Querschnittsform, beispielsweise eine quadratische oder rechteckige Querschnittsform haben. Das Gehäuse 2 weist eine sich in seine Längsrichtung erstreckende Öffnung oder Ausnehmung auf, in die das Ultraschallwandler-Array 6 eingesetzt ist, so dass die Sende- und Empfangsfläche 8 des Ultraschallwandler-Arrays 6 unmittelbar oder über ein ebenes Fenster an den Außenraum des Ultraschall-Prüfkopfes 1 angrenzt.

An einer Stirnseite 10 des Gehäuses 2, die ebenfalls mit einer Öffnung versehen ist, ist ein Einzelwandler 12 angeordnet, dessen Sende- und Empfangsfläche 14 senkrecht zur Sende- und Empfangsfläche 8 angeordnet ist, und der zum Senden und Empfangen von Ultraschallsignalen vorgesehen ist, die in Richtung der Längsachse 16 des Gehäuses 2 emittiert werden bzw. aus einer solchen Richtung empfangen werden. Ein in der Figur nur schematisch angedeutetes Kabel dient zur Ansteuerung des Ultraschallwandler-Arrays 6 bzw. des Einzelwandlers 12. In der Fig. 1 ist außerdem noch eine Mittellängsachse 18 der Sende-und Empfangsfläche 8 des linearen Ultraschallwandlers-Arrays 6 eingezeichnet, die parallel zur Längsachse 16 des Gehäuses 2 orientiert ist.

In der Draufsicht gemäß Fig. 2 ist zu erkennen, dass die Sende- und Empfangsflächen 8 bzw. 14 des Ultraschallwandler-Arrays 6 bzw. des Einzelwandlers 12 senkrecht zueinander orientiert sind.

Fig. 3 zeigt beispielhaft ein zu prüfendes Bauteil 19, wie es im Flugzeugbau zur Herstellung zweischaliger Wandelemente zum Einsatz kommt. Im Beispiel werden durch dieses Bauteil rechteckige hohle Zellen oder Kammern 20 gebildet, die an einander gegenüberliegenden Breitseiten offen sind. Die Wände dieser Kammern 20 werden durch sich kreuzende Stege 22 gebildet, die ein Doppel-T-Profil aufweisen, so dass sich an den Kreuzungsstellen sowohl schwer zugängliche Eckbereiche 24 als auch Kantenbereiche 26 ergeben. Die Stege 22 bestehen beispielsweise aus kohlefaserverstärktem Kunststoff (CFK), wobei die Eckbereiche 24 bzw. die Kantenbereiche 26 in der Praxis einen Radius R aufweisen können.

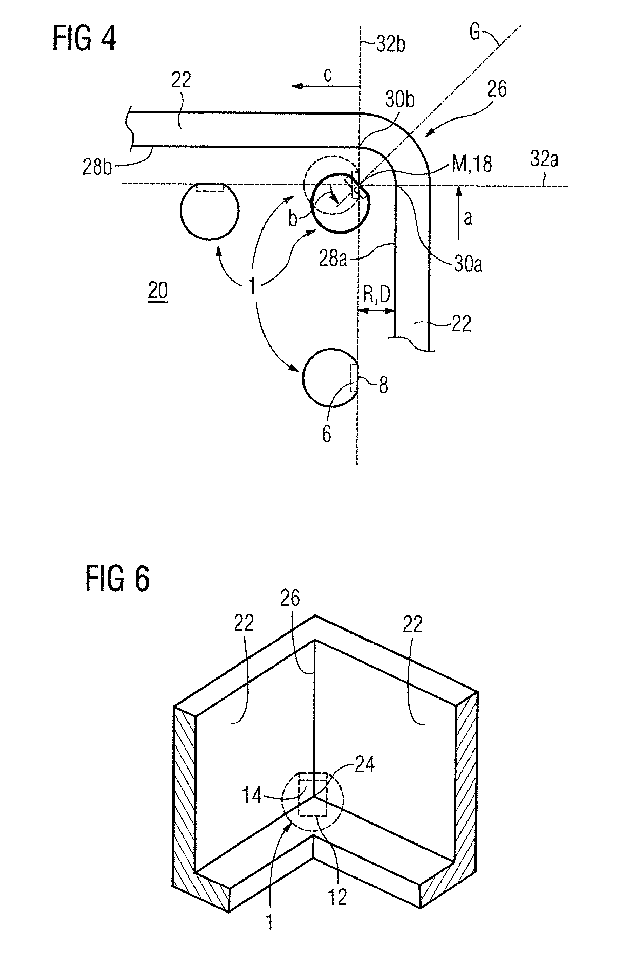

Fig. 4 zeigt eine mögliche Prüffahrt des in Figuren 1 und 2 dargestellten Ultraschall-Prüfkopfes 1 beim Prüfen der Stege 22 im abgerundeten Kantenbereich 26, in dem erste und zweite seitliche Wandflächen 28a,b zweier Stege 22 aneinander grenzen bzw. nahtlos ineinander übergehen, wobei aus Gründen der Übersichtlichkeit weder weitere Zellen noch die in Fig. 3 erkennbaren Doppel-T-Profile an den Schmalseiten der Stege 22 dargestellt sind.

Der Ultraschall-Prüfkopf 1 wird dabei während des Prüfens der ersten Wandfläche 28a entlang dieser mit parallel zu dieser orientierter und sich in Längsrichtung des abgerundeten Kantenbereiches 26 erstreckender Sende- und Empfangsfläche 8 in einem dem Radius R des abgerundeten Kantenbereiches 26 entsprechenden Abstand D in Richtung des Pfeils a geführt, bis er eine in Fig. 4 gestrichelt eingezeichnete Position erreicht, in der die Mittellängsachse 18 der Sende- und Empfangsfläche 8 des Ultraschallwandler-Arrays 6 mit einer ersten Trennlinie 30a zwischen abgerundetem Kantenbereich 26 und erster seitlicher Wandfläche 28a eine zur ersten Wandfläche 28a senkrechte Ebene 32a aufspannt. Da der Abstand R dem Innenradius des abgerundeten Kantenbereiches 26 entspricht liegt dessen Radiusmittelpunkt M auf der Mittellängsachse 18. Auf diese Weise ist nur durch eine Drehbewegung sichergestellt, dass eine senkrecht auf der Sende- und Empfangsfläche 8 stehende und die Mittellängsachse 18 schneidende Gerade G stets senkrecht auf der Oberfläche des abgerundeten Bereiches 26 steht und durch den Radiusmittelpunkt M geht, so dass der Abstand D zwischen Mittellängsachse 18 und abgerundetem Bereich 26 stets derselbe ist. Der Ultraschall-Prüfkopf 1 wird nun zum Prüfen des abgerundeten Kantenbereiches 26 schrittweise um die Mittellängsachse 18 in Richtung des Pfeiles b so lange gedreht, bis die Sende- und Empfangsfläche 8 des Ultraschallwandler-Arrays 6 senkrecht zur zweiten Wandfläche 28b orientiert ist, d.h. bis die Mittellängsachse 18 und die Trennlinie 30b zwischen zweiter Wandfläche 28b und abgerundetem Kantenbereich 26 ebenfalls eine zur zweiten Wandfläche 28 senkrechte Ebene 32b aufspannen. Danach wird der Ultraschall-Prüfkopf 1 entlang der angrenzenden Wandfläche mit parallel zu dieser orientierter Sende- und Empfangsfläche 8 in Richtung des Pfeils c geführt.

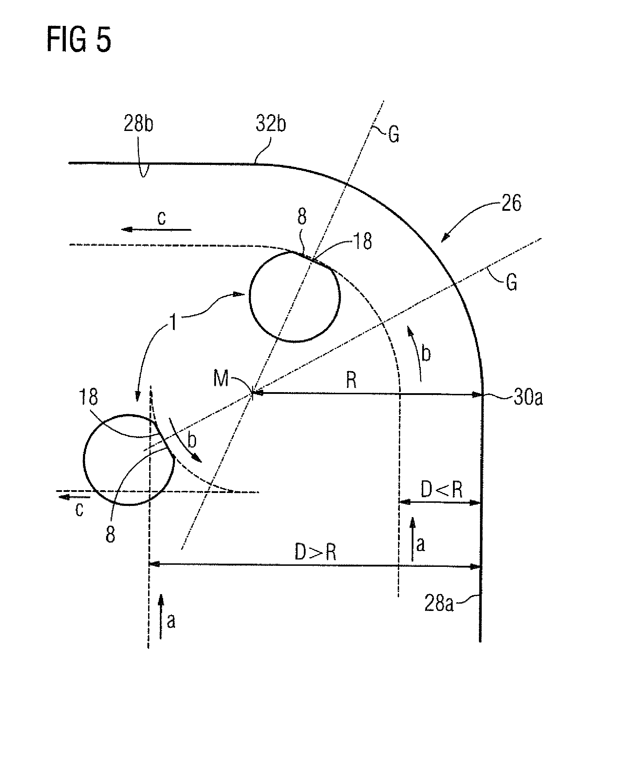

Alternativ zu dem in Fig. 4 dargestellten Spezialfall (D = R) ist es auch möglich, den Ultraschall-Prüfkopf 1 in einem vom Radius R abweichenden Abstand D entlang den ersten und zweiten Wandflächen 28a,b zu führen und den Ultraschall-Prüfkopf 1 bei Erreichen der ersten Trennlinie 30a im abgerundeten Kantenbereich 26 durch eine kombinierte Schwenk- und Längsbewegung (Pfeil b) derart zu drehen und zu verfahren, dass auch in diesen Fällen eine auf der Sende- und Empfangsfläche 8 senkrecht stehende und die Mittellängsachse 18 schneidende Gerade G stets durch den Radiusmittelpunkt M des abgerundeten Kantenbereiches 26 geht und der durch die Gerade G festgelegte Abstand D zwischen Sende- und Empfangsfläche 8 und dem abgerundeten Bereich 26 stets gleichbleibt. Dies ist in Fig. 5 anhand zweier in unterschiedlichen Abständen D (D > R und D < R) durchgeführten und gestrichelt eingezeichneten Prüffahrten schematisch veranschaulicht, wobei durch die Pfeile a,b,c die einzelnen Abschnitte der Verfahrbewegung gekennzeichnet sind.

Fig. 6 zeigt zwei in einem Kreuzungsbereich zusammen stoßende Stege, mit L-förmigem Profil, durch die eine dreidimensionale Ecke gebildet wird. In diesem Beispiel sind zur Vereinfachung der zeichnerischen Darstellung die in diesen Bereichen auftretenden Rundungen nicht eingezeichnet. Zum Prüfen dieses Eckbereiches wird der Ultraschall-Prüfkopf 1 verkippt bzw. geneigt, so dass der Einzelwandler 12 mit seiner Sende- und Empfangsfläche 14 auf die Ecke 24 bzw. den Mittelpunkt des Eckbereiches derart ausgerichtet wird, dass die Normale seiner Sende-und Empfangsfläche 14 unter 45° zu den im Eckbereich bildenden Wandflächen des Kastens ausgerichtet ist. Durch ein Verschwenken um diese Raumdiagonale können dementsprechend auch abgerundete Eckbereiche geprüft werden.

Das Führen des Ultraschall-Prüfkopfes erfolgt dabei mit einem Manipulator oder Roboter, der entsprechend der vorliegenden und zu prüfenden Bauteilgeometrie programmiert ist, wobei sich das Bauteil während der Prüfung vollständig unter Wasser befindet.

## Patentansprüche

1. Ultraschall-Prüfkopf (1) mit einem in einem stabförmigen Gehäuse (2) angeordneten linearen Ultraschallwandler-Array (6), dessen Sende-und Empfangsfläche (8) sich parallel einer Längsachse (16) des Gehäuses (2) erstreckt, sowie mit einem an einer Stirnseite (19) des Gehäuses (2) angeordneten Einzelwandler (12), dessen Sende- und Empfangsfläche (14) senkrecht zu dieser Längsachse (16) orientiert ist.

2. Ultraschall-Prüfkopf (1) nach Anspruch 1, bei dem ein der Sende-und Empfangsfläche (8) des Ultraschallwandler-Arrays (6) zugewandter Flächenbereich des Gehäuses (2) eben und parallel zu dieser orientiert ist.

3. Ultraschall-Prüfkopf (1) nach Anspruch 1 oder 2, bei dem die dem Einzelwandler (12) zugewandte Stirnseite (19) des Gehäuses (2) eben und parallel zu dessen Sende- und Empfangsfläche (14) orientiert ist.

4. Verfahren zur Ultraschallprüfung eines unter Wasser befindlichen Bauteils (19) mit einem Ultraschall-Prüfkopf (1) nach einem der vorhergehenden Ansprüche, wobei das Bauteil (19) eine Vielzahl von hohlen Kammern (20) aufweist, deren aneinander grenzende seitliche Wandflächen (28a, 28b) in einem abgerundeten Kantenbereich (26) mit Radius R ineinander übergehen, wobei zur Prüfung des Kantenbereichs (26) und eines sich daran anschließenden Eckbereichs (24) folgende Schritte durchgeführt werden:
a) Der Ultraschall-Prüfkopf (1) wird zum Prüfen einer ersten Wandfläche (28a) mit parallel zu dieser orientierter Sende-und Empfangsfläche (8) des linearen Ultraschallwandler-Arrays (6) entlang der ersten Wandfläche (28a) in einem Abstand (D) geführt, bis die Mittellängsachse (18) der Sende- und Empfangsfläche (8) des Ultraschallwandler-Arrays (6) mit einer ersten Trennlinie (30a), die zwischen abgerundetem Kantenbereich (26) und erster seitlicher Wandfläche (28a) liegt, eine zur ersten seitlichen Wandfläche (28a) senkrechte Ebene (32a) aufspannen,
b) anschließend wird der Ultraschall-Prüfkopf (1) zum Prüfen des abgerundeten Kantenbereiches (26) schrittweise so lange derart gedreht und/oder verfahren, dass eine senkrecht auf der Sende- und Empfangsfläche (8) stehende und die Mittellängsachse (18) schneidende Gerade (G) stets durch den Radiusmittelpunkt (M) des abgerundeten Kantenbereiches geht und der durch diese Gerade festgelegte Abstand (D) zwischen Sende- und Empfangsfläche (8) und abgerundetem Kantenbereich (26) stets gleichbleibt, bis die Sende- und Empfangsfläche (8) senkrecht zu einer an den abgerundeten Kantenbereich (26) angrenzenden zweiten seitlichen Wandfläche (28b) orientiert ist,
c) danach wird der Ultraschall-Prüfkopf (1) entlang der zweiten seitlichen Wandfläche (28b) mit parallel zu dieser orientierter Sende- und Empfangsfläche (8) geführt,
d) zur Prüfung des sich an den Kantenbereich (26) anschließenden Eckbereichs (24) wird der Ultraschall-Prüfkopf (1) derart geneigt, dass die Sende- und Empfangsfläche (14) des Einzelwandlers (12) auf den Eckbereich (24) hin gerichtet ist.
